(19) Europäisches Patentamt / European Patent Office / Office européen des brevets

(11) **EP 4 269 477 A1**

(12) **EUROPEAN PATENT APPLICATION**
published in accordance with Art. 153(4) EPC

(43) Date of publication:
**01.11.2023 Bulletin 2023/44**

(21) Application number: **22898922.4**

(22) Date of filing: **14.11.2022**

(51) International Patent Classification (IPC):
***C08J 3/24*** *(2006.01)*

(52) Cooperative Patent Classification (CPC):
**C08J 3/24**

(86) International application number:
**PCT/KR2022/017882**

(87) International publication number:
**WO 2023/096240 (01.06.2023 Gazette 2023/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.11.2021 KR 20210167459**

(71) Applicant: **LG Chem, Ltd.
Seoul 07336 (KR)**

(72) Inventors:
• **WON, Tae Young
Daejeon 34122 (KR)**
• **LEE, Junwye
Daejeon 34122 (KR)**
• **KIM, Minsu
Daejeon 34122 (KR)**

(74) Representative: **Plasseraud IP
66, rue de la Chaussée d'Antin
75440 Paris Cedex 09 (FR)**

(54) **PREPARATION METHOD OF SUPER ABSORBENT POLYMER**

(57)    Provided is a method of preparing a superabsorbent polymer. More particularly, provided is a method of preparing a superabsorbent polymer, in which degradation of physical properties of the polymer due to a mechanical force generated during a surface crosslinking process is minimized by controlling operating conditions of a surface crosslinking reactor in the step of surface crosslinking, thereby improving absorption properties of the superabsorbent polymer finally prepared.

**Description**

[Technical Field]

Cross-reference to Related Application

The present application is based on, and claims priority from, Korean Patent Application No. 10-2021-0167459, filed on November 29, 2021, the disclosure of which is hereby incorporated by reference herein in its entirety.

The present invention relates to a method of preparing a superabsorbent polymer. More particularly, the present invention relates to a method of preparing a superabsorbent polymer, in which degradation of physical properties of the polymer due to a mechanical force generated during a surface crosslinking process is minimized by controlling operating conditions of a surface crosslinking reactor in the step of surface crosslinking, thereby improving absorption properties of the superabsorbent polymer finally prepared.

[Background Art]

A superabsorbent polymer (SAP) is a synthetic polymeric material capable of absorbing moisture from 500 to 1000 times its own weight. Various manufacturers have denominated it as different names, such as SAM (Super Absorbency Material), AGM (Absorbent Gel Material), etc. Since such superabsorbent polymers started to be practically applied in sanitary products, now they have been widely used for water retaining soil products for gardening, water stop materials for the civil engineering and construction, sheets for raising seedling, fresh-keeping agents for food distribution fields, materials for poultice, etc.

In most cases, these superabsorbent polymers have been widely used in the field of sanitary materials such as diapers or sanitary napkins. Inside the sanitary materials, the superabsorbent polymer is generally distributed throughout pulp. However, recent efforts have been continuously made to provide sanitary materials such as diapers having a thinner thickness, etc., and as part of that, diapers having a reduced content of pulp, and furthermore, diapers having no pulp, so-called pulpless diapers are actively under development.

As described above, such a sanitary material having a reduced content of pulp or having no pulp includes the superabsorbent polymer at a relatively high ratio, and the superabsorbent polymer particles are inevitably included as multiple layers in the sanitary materials. In order to allow the whole superabsorbent polymer particles included as multiple layers to more efficiently absorb a large amount of liquid such as urine, etc., it is necessary that the superabsorbent polymer basically exhibits high absorption performance and high absorption rate.

Various post-treatment processes such as a surface crosslinking process, a foaming process, etc., are known in order to improve physical properties related to absorption of superabsorbent polymers, such as absorbency, absorption rate, etc.

However, depending on operating conditions of devices used in these steps, a physical force is applied to superabsorbent polymers to be prepared, leading to changes in a surface-crosslinked layer or the internal structure of particles, and thus there is a problem in that absorption properties rather deteriorate. Therefore, it is necessary to develop a technology to realize the desired excellent physical properties while minimizing these effects.

[Disclosure]

[Technical Problem]

Accordingly, there is provided a method of preparing a superabsorbent polymer, in which degradation of physical properties of the polymer due to a mechanical force generated during a surface crosslinking process is minimized by controlling operating conditions of a surface crosslinking reactor in the step of surface crosslinking, thereby improving absorption properties of the superabsorbent polymer finally prepared.

[Technical Solution]

To achieve the above object, there is provided a method of preparing a superabsorbent polymer, the method including the step of:

preparing superabsorbent polymer particles having a surface-crosslinked layer which is formed on at least part of the surface of acrylic acid-based base polymer particles by heat-treating a mixture including the acrylic acid-based base polymer particles in the presence of a surface crosslinking agent,
wherein the step of forming the surface-crosslinked layer is performed in a surface crosslinking reactor satisfying ATT index of 3 or less, the ATT index defined by the following Equation 1:

[Equation 1]

$$\text{ATT index} = \text{Linear velocity(m/s)} * \text{Residence time (hr)} * 3{,}600 / 1{,}000$$

wherein the linear velocity (m/s), which is the rotational speed of the surface crosslinking reactor, is 0.6 m/s to 0.9 m/s, and

the residence time (hr), which is the time that the mixture resides inside the surface crosslinking reactor, is 1.0 hr to 1.5 hr.

[Effect of the Invention]

According to a method of preparing a superabsorbent polymer of the present invention, degradation of physical properties of the polymer due to a mechanical force generated during a surface crosslinking process is minimized by controlling a specific ATT index into 3 or less, the ATT index controlling operating conditions of a reactor in the step of surface crosslinking, and finally, it is possible to prepare a superabsorbent polymer realizing excellent absorption properties.

[Best Mode for Carrying Out the Invention]

The terms used in this description are just for explaining exemplary embodiments and it is not intended to restrict the present invention.

The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The terms "first, second, third", and the like are used to describe a variety of components, and these terms are merely employed to differentiate a certain component from other components.

The present invention may be variously modified and have various forms, and specific exemplary embodiments are exemplified and explained in detail in the following description. However, it is not intended to limit the present invention to the specific exemplary embodiments, and it must be understood that the present invention includes every modifications, equivalents, or replacements included in the spirit and technical scope of the present invention.

As used herein, the term "polymer" refers to those in a polymerized state of an acrylic acid-based monomer, and may include all water content ranges or particle size ranges. Among the above polymers, a polymer having a water content (moisture content) of about 40% by weight or more in a state after polymerizing before drying may be referred to as a water-containing gel polymer, and particles obtained by pulverizing and drying such a water-containing gel polymer may be referred to as a crosslinked polymer.

Further, the term "superabsorbent polymer powder" refers to a material in the form of particles, the material including a crosslinked polymer which is obtained by polymerizing an acrylic acid-based monomer including acidic groups of which at least part is neutralized, and then crosslinking by an internal crosslinking agent.

Further, the term "superabsorbent polymer" refers to, depending on the context, a crosslinked polymer obtained by polymerizing an acrylic acid-based monomer including acidic groups of which at least part is neutralized, or a base polymer in the form of powder consisting of superabsorbent polymer particles obtained by pulverizing the crosslinked polymer, or is used to encompass those made suitable for commercialization by performing an additional process on the crosslinked polymer or the base polymer, for example, surface crosslinking, re-assembling of fine particles, drying, pulverizing, classifying, etc.

Further, as used herein, the term "crosslinked polymer" refers to those obtained by crosslinking polymerization of the acrylic acid-based monomer in the presence of an internal crosslinking agent, and the "base polymer particles" refers to a particles-type (powder-type) material including such a crosslinked polymer.

A method of preparing a superabsorbent polymer according to one embodiment of the present invention includes the step of preparing superabsorbent polymer particles having a surface-crosslinked layer which is formed on at least part of the surface of acrylic acid-based base polymer particles by heat-treating a mixture including the acrylic acid-based base polymer particles in the presence of a surface crosslinking agent.

The superabsorbent polymer is generally prepared by the steps of polymerizing a monomer to produce a water-containing gel polymer containing a large amount of water, drying the water-containing gel polymer, pulverizing the polymer into polymer particles having a desired particle size, and crosslinking the surface thereof. However, in the step of surface crosslinking, the reaction is performed in a specific surface crosslinking reactor, and therefore, according to operating conditions of the device, a physical force is applied to the prepared superabsorbent polymer, leading to changes in a surface-crosslinked layer or the internal structure of particles, and thus there has been a problem in that absorption properties rather deteriorate.

Accordingly, the present inventors found that when an ATT index controlling the operating conditions of the reactor in the step of surface crosslinking is derived, and controlled within a specific range, it is possible to realize the desired excellent absorption properties while minimizing the damage caused by the physical force of the device, thereby completing the present invention.

The superabsorbent polymer prepared according to the present invention may realize the excellent absorption properties, in particular, excellent effective capacity, saline flow conductivity, and high absorption rate.

Hereinafter, each step of a method of preparing a superabsorbent polymer according to one exemplary embodiment of the present invention will be described in detail.

The method of preparing the superabsorbent polymer according to one exemplary embodiment of the present invention includes the step of preparing superabsorbent polymer particles having a surface-crosslinked layer which is formed on at least part of the surface of acrylic acid-based base polymer particles by heat-treating a mixture including the acrylic acid-based base polymer particles in the presence of a surface crosslinking agent.

Prior to this, the acrylic acid-based base polymer particles may be prepared by the step of forming a water-containing gel polymer by crosslinking-polymerizing an acrylic acid-based monomer having acidic groups of which at least part is neutralized, in the presence of an internal crosslinking agent; and the step of drying and pulverizing the water-containing gel polymer.

Hereinafter, the step of forming the water-containing gel polymer (polymerizing step) and the step of drying and pulverizing the same, before the step of surface crosslinking, will be first explained.

**(Polymerizing step)**

The method of preparing the superabsorbent polymer according to one exemplary embodiment of the present invention includes the step of forming a water-containing gel polymer by crosslinking-polymerizing an acrylic acid-based monomer having acidic groups of which at least part is neutralized, in the presence of an internal crosslinking agent.

Specifically, the step is a step of forming a water-containing gel polymer by performing thermal polymerization or photopolymerization of a monomer composition including a monomer mixture and a polymerization initiator in the presence of an internal crosslinking agent.

The acrylic acid-based monomer may be any monomer commonly used in the preparation of superabsorbent polymers. For non-limiting example, the acrylic acid-based monomer may be a compound represented by the following Chemical Formula 1:

[Chemical Formula 1]   $R_1\text{-COOM}^1$

in Chemical Formula 1,

$R_1$ is a C2-C5 alkyl group containing an unsaturated bond, and
$M^1$ is a hydrogen atom, a monovalent or divalent metal, an ammonium group, or an organic amine salt.

Preferably, the acrylic acid-based monomer may be one or more selected from the group consisting of acrylic acid, methacrylic acid, and a monovalent metal salt thereof, a divalent metal salt thereof, an ammonium salt thereof, and an organic amine salt thereof. When such an acrylic acid-based monomer is used, it is advantageous in that a superabsorbent polymer having improved absorbency may be obtained. In addition, as the monomer, one or more selected from the group consisting of an anionic monomer such as maleic anhydride, fumaric acid, crotonic acid, itaconic acid, 2-acryloyl ethane sulfonic acid, 2-methacryloyl ethane sulfonic acid, 2-(meth)acryloyl propane sulfonic acid, or 2-(meth)acrylamide-2-methylpropane sulfonic acid, and a salt thereof; a nonionic hydrophilic monomer such as (meth)acrylamide, N-substituted (meth)acrylate, 2-hydroxyethyl(meth)acrylate, 2-hydroxypropyl(meth)acrylate, methoxypolyethyleneglycol(meth)acrylate, or polyethyleneglycol(meth)acrylate; and an amino group-containing unsaturated monomer such as (N,N)-dimethylaminoethyl(meth)acrylate or (N,N)-dimethylaminopropyl(meth)acrylamide, and a quaternary compound thereof.

Here, the acrylic acid-based monomer has acidic groups, of which at least part may be partially neutralized. Preferably, the acrylic acid-based monomer may be partially neutralized with a neutralizing solution including an alkaline substance such as sodium hydroxide, potassium hydroxide, ammonium hydroxide, etc.

In this regard, the degree of neutralization of the monomer may be 40 mol% to 95 mol%, or 40 mol% to 80 mol%, or 45 mol% to 75 mol%. The range of the degree of neutralization may vary depending on the final physical properties. However, when the degree of neutralization is excessively high, the neutralized monomers are precipitated, and thus polymerization may not readily occur. On the contrary, when the degree of neutralization is excessively low, absorbency of the polymer greatly decreases, and furthermore, the polymer may exhibit hard-to-handle properties, like elastic rubber.

As used herein, the term "internal crosslinking agent" is used to distinguish it from a "surface crosslinking agent" for crosslinking the surface of the base polymer, and the internal crosslinking agent functions to polymerize the acrylic acid-based monomer by crosslinking the unsaturated bonds thereof. The crosslinking in the above step occurs regardless of the surface or inside of the polymer. However, through the surface crosslinking process of the base polymer described below, the particle surface of the superabsorbent polymer finally prepared has a structure crosslinked by the surface crosslinking agent, and the inside thereof has a structure crosslinked by the internal crosslinking agent.

As the internal crosslinking agent, multifunctional components may be used, and for example, one or more selected from the group consisting of N,N'-methylenebisacrylamide, trimethylolpropane tri(meth)acrylate, ethylene glycol di(meth)acrylate, polyethylene glycol (meth)acrylate, propylene glycol di(meth)acrylate, polypropylene glycol (meth)acrylate, butanediol di(meth)acrylate, butylene glycol di(meth)acrylate, diethylene glycol di(meth)acrylate, hexanediol di(meth)acrylate, triethylene glycol di(meth)acrylate, tripropylene glycol di(meth)acrylate, tetraethylene glycol di(meth)acrylate, dipentaerythritol pentaacrylate, glycerin tri(meth)acrylate, pentaerythritol tetraacrylate, triarylamine, ethylene glycol diglycidyl ether, propylene glycol, glycerin, and ethylene carbonate may be used. Preferably, propylene glycol di(meth)acrylate or polyethylene glycol diacrylate may be used.

The internal crosslinking agent may be used in an amount of 100 ppmw to 10,000 ppmw with respect to the weight of the acrylic acid-based monomer. When the internal crosslinking agent is included in the above content range, strength beyond the appropriate level may be realized by sufficient crosslinking, and sufficient water retention capacity may be realized by introduction of the appropriate crosslinked structure. Preferably, the internal crosslinking agent may be included in an amount of 100 ppmw or more, 200 ppmw or more, 300 ppmw or more, or 600 ppmw or more, and 10,000 ppmw or less, 9,000 ppmw or less, 7,000 ppmw or 5,000 ppmw or less, and 200 ppmw to 9,000 ppmw, 300 ppmw to 7,000 ppmw or 600 ppmw to 5,000 ppmw. When the content of the internal crosslinking agent is too low, sufficient crosslinking does not occur, and thus it may be difficult to achieve a strength beyond the appropriate level, and when the content of the internal crosslinking agent is too high, the internal crosslinking density increases, and thus it may be difficult to achieve a desired water retention capacity.

Further, the monomer composition may include a polymerization initiator commonly used in the preparation of superabsorbent polymers. For non-limiting example, as the polymerization initiator, a thermal polymerization initiator or a photopolymerization initiator may be used depending on a polymerization method. However, even though the photopolymerization is performed, a certain amount of heat may be generated by UV irradiation or the like, and also generated with the polymerization reaction which is an exothermic reaction. Therefore, the thermal polymerization initiator may be further included.

As the photopolymerization initiator, for example, one or more compounds selected from the group consisting of benzoin ether, dialkyl acetophenone, hydroxyl alkylketone, phenyl glyoxylate, benzyl dimethyl ketal, acyl phosphine, and α-aminoketone may be used. Meanwhile, among them, specific examples of acyl phosphine may include diphenyl(2,4,6-trimethylbenzoyl)phosphine oxide, phenylbis(2,4,6-trimethylbenzoyl)phosphine oxide, ethyl (2,4,6-trimethylbenzoyl)phenylphosphinate or the like. More various photopolymerization initiators are well disclosed in "UV Coatings: Basics, Recent Developments and New Application(Elsevier 2007)" written by Reinhold Schwalm, p 115, but are not limited to the above-described examples.

Further, as the thermal polymerization initiator, persulfate-based initiators or azo-based initiators which are the above-described oxidizing agent components may be used, and in addition, hydrogen peroxide, ascorbic acid, etc. may be used. These compounds may be used alone or in a mixture of two or more thereof. More various thermal polymerization initiators are well disclosed in 'Principle of Polymerization (Wiley, 1981)' written by Odian, p 203, which may be served as a reference.

Such a polymerization initiator may be added in an amount of 10 ppmw to 30,000 ppmw, preferably, 50 ppmw to 10,000 ppmw, or 80 ppmw to 10,000 ppmw with respect to the weight of the acrylic acid-based monomer. When the concentration of the polymerization initiator is too low, the polymerization rate may become slow, and monomers remaining in the final product may be extracted in a large amount, which is not preferred. On the contrary, when the concentration of the polymerization initiator is too high, polymer chains constituting the network become short, and thus the content of water-soluble components is increased and physical properties of the polymer may deteriorate, such as a reduction in absorbency under pressure, which is not preferred.

In addition, the monomer composition may further include an additive such as a blowing agent, a thickener, a plasticizer, a preservation stabilizer, an antioxidant, etc., as needed.

The blowing agent serves to increase the surface area by forming pores inside the water-containing gel polymer when foaming occurs during polymerization. As the blowing agent, carbonate may be used, and for example, sodium bicarbonate, sodium carbonate, potassium bicarbonate, potassium carbonate, calcium bicarbonate, calcium carbonate, magnesium bicarbonate, or magnesium carbonate may be used. As a commercially available blowing agent, F-36D which is an encapsulated blowing agent may be used, but is not limited thereto.

Further, the blowing agent may be preferably used in an amount of 1500 ppmw or less with respect to the weight of the acrylic acid-based monomer. When the use of the blowing agent exceeds 1500 ppmw, too many pores are formed to deteriorate gel strength of the superabsorbent polymer and to decrease density, which may cause problems in distribution and storage. Further, the blowing agent may be preferably used in an amount of 500 ppmw or more, or 1000 ppmw or more with respect to the weight of the water-soluble ethylenically unsaturated monomer.

Further, the surfactant induces uniform dispersion of the blowing agent, leading to uniform blowing during blowing, thereby preventing gel strength or density from lowering. As the surfactant, an anionic surfactant is preferably used. Specifically, the surfactant includes an $SO_3^-$ anion, and a compound represented by the following Chemical Formula 2 may be used.

[Chemical Formula 2]          $R\text{-}SO_3Na$

in Chemical Formula 2,
R is a C8 to C16 alkyl.

Further, the surfactant is preferably used in an amount of 300 ppmw or less with respect to the weight of the acrylic acid-based monomer. When the amount of the surfactant used exceeds 300 ppmw, the content of the surfactant in the superabsorbent polymer increases, which is not preferred. In addition, the surfactant is preferably used in an amount of 100 ppmw or more, or 150 ppmw or more with respect to the weight of the water-soluble ethylenically unsaturated monomer.

Further, such a monomer composition may be prepared in a solution form, in which the raw materials, such as the above-described internal crosslinking agent, the acrylic acid-based monomer, polymerization initiator, etc., are dissolved in a solvent.

In this regard, as the applicable solvent, any solvent may be used without limitations in the composition, as long as it is able to dissolve the above-described raw materials. For example, as the solvent, water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethylether, toluene, xylene, butyrolactone, carbitol, methyl cellosolve acetate, N,N-dimethylacetamide, or a mixture thereof may be used.

The step of forming the water-containing gel polymer through the polymerization of the monomer composition may be performed by a common polymerization method, and the process is not particularly limited. For non-limiting example, the polymerization method is largely classified into thermal polymerization and photopolymerization according to the kind of a polymerization energy source. When the thermal polymerization is performed, it may be performed in a reactor like a kneader equipped with agitating spindles. When the photopolymerization is performed, it may be performed in a reactor equipped with a movable conveyor belt.

For example, the monomer composition is injected to the reactor like the kneader equipped with the agitating spindles, and thermal polymerization is carried out by providing hot air thereto or by heating the reactor, thereby obtaining the water-containing gel polymer. In this regard, the water-containing gel polymer discharged from an outlet of the reactor may be obtained as particles having a size of several centimeters or millimeters, according to the type of agitating spindles equipped in the reactor. Specifically, the water-containing gel polymer may be obtained in various forms according to a concentration of the monomer composition fed thereto, a feeding speed or the like, and the water-containing gel polymer having a (weight average) particle size of 2 mm to 50 mm may be generally obtained.

For another example, when the monomer composition is subjected to photopolymerization in the reactor equipped with the movable conveyor belt, the water-containing gel polymer may be obtained in a sheet-type. In this regard, the thickness of the sheet may vary according to the concentration of the monomer composition fed thereto and the feeding speed. The sheet is preferably controlled at a thickness of 0.5 cm to 10 cm in order to assure the production speed while allowing the entire sheet to be uniformly polymerized.

The water-containing gel polymer thus obtained by such a method may exhibit a water content of 40% by weight to 80% by weight. Meanwhile, the "water content", as used throughout the specification, means a weight occupied by water with respect to the total weight of the water-containing gel polymer, which may be a value obtained by subtracting the weight of the dried polymer from the weight of the water-containing gel polymer. Specifically, the water content may be defined as a value calculated by measuring the weight loss due to evaporation of water in the polymer during the process of drying by raising the temperature of the polymer through infrared heating. At this time, the water content is measured under the following drying conditions: the drying temperature is increased from room temperature to 180°C and then the temperature is maintained at 180°C, and the total drying time is set to 20 minutes, including 5 minutes for the temperature rising step.

**(Drying, Pulverizing, and Classifying step)**

Next, the step of preparing acrylic acid-based base polymer particles by drying, pulverizing, and classifying the water-containing gel polymer is included.

Specifically, the step of drying the obtained water-containing gel polymer is performed. As needed, the step of coarsely pulverizing the water-containing gel polymer may be performed, before drying, in order to increase efficiency of the drying process.

In this regard, a pulverizer to be applicable may include, but there is no limitation in the configuration, specifically, any one selected from the group consisting of a vertical pulverizer, a turbo cutter, a turbo grinder, a rotary cutter mill, a cutter mill, a disc mill, a shred crusher, a crusher, a chopper, and a disc cutter, but is not limited to the above-described examples.

In this regard, the step of coarsely pulverizing may be carried out such that the particle size of the water-containing gel polymer becomes about 2 mm to about 10 mm. Pulverizing into a particle size of less than 2 mm is not technically easy due to the high water content of the water-containing gel polymer, and an agglomeration phenomenon between the pulverized particles may occur. Meanwhile, when the polymer is pulverized into a particle size of more than 10 mm, the effect of increasing the efficiency in the subsequent drying step may be poor.

The water-containing gel polymer coarsely pulverized as above or the water-containing gel polymer immediately after polymerization without the step of coarsely pulverizing is subjected to drying. In this regard, a drying temperature of the drying step may be about 150°C to about 250°C. When the drying temperature is lower than 150°C, it is apprehended that the drying time becomes too long and the physical properties of the superabsorbent polymer finally formed may deteriorate. When the drying temperature is higher than 250°C, it is apprehended that only the polymer surface is excessively dried, and thus fine particles may be generated during the subsequent pulverization process, and the physical properties of the superabsorbent polymer finally formed may deteriorate. Therefore, the drying may be preferably performed at a temperature of about 150°C to about 200°C, and more preferably, at a temperature of about 170°C to about 195°C.

Meanwhile, the drying time may be about 20 minutes to about 90 minutes, in consideration of the process efficiency, but is not limited thereto.

In the step of drying, any drying method may be selected and used without limitation in view of constitution, as long as it is commonly used in the process of drying the water-containing gel polymer. Specifically, the step of drying may be carried out by a method such as hot air supply, infrared irradiation, microwave irradiation or ultraviolet irradiation, etc. When the step of drying as above is finished, the water content of the polymer may be about 0.1% by weight to about 10% by weight.

Next, the step of pulverizing the dried polymer obtained through the step of drying is performed.

The polymer powder obtained after the step of pulverizing may have a particle size of about 150 $\mu$m to about 850 $\mu$m. A pulverizer which may be used to achieve the above particle size may specifically include a pin mill, a hammer mill, a screw mill, a roll mill, a disc mill, or a jog mill, etc., but are not limited to the above-described examples.

In order to manage the physical properties of the superabsorbent polymer particles that are finally commercialized after the step of pulverizing, a separate process of classifying the polymer particles obtained after the pulverization according to the particle size may be carried out. Preferably, a polymer having a particle size of about 150 $\mu$m to about 850 $\mu$m is classified, and only the polymer particles having such a particle size are subjected to a surface crosslinking reaction, followed by commercialization. More specifically, the acrylic acid-based base polymer particles classified as above may have a particle size of 150 $\mu$m to 850 $\mu$m, and may include 50% by weight or more of particles having a particle size of 300 $\mu$m to 600 $\mu$m.

**(Surface crosslinking step)**

The method of preparing the superabsorbent polymer according to one embodiment of the present invention includes the step of preparing superabsorbent polymer particles having a surface-crosslinked layer which is formed on at least part of the surface of acrylic acid-based base polymer particles by heat-treating a mixture including the acrylic acid-based base polymer particles in the presence of a surface crosslinking agent.

The step of surface crosslinking is to induce a crosslinking reaction on least part of the surface of the acrylic base polymer particles in the presence of the surface crosslinking agent, and unsaturated bonds of the acrylic monomers, which remain uncrosslinked on the surface, are crosslinked by the surface crosslinking agent, and as a result, the superabsorbent polymer having an increased surface crosslinking density is formed.

The acrylic acid-based base polymer particles may be prepared through the above-described steps of polymerizing, drying, pulverizing, and classifying.

In the step of surface crosslinking, the reaction is performed in a specific surface crosslinking reactor, and accordingly, depending on operating conditions of the device, a physical force is applied to superabsorbent polymers to be prepared, leading to changes in the surface-crosslinked layer or the internal structure of particles, and thus there is a problem in that absorption properties rather deteriorate. Accordingly, the method of preparing the superabsorbent polymer according to one embodiment of the present invention was derived in order to minimize degradation of physical properties of the polymer due to the mechanical force generated during the surface crosslinking process.

Specifically, the step of forming the surface-crosslinked layer according to one embodiment of the present invention is characterized in that the step is performed in a surface crosslinking reactor satisfying an ATT index (Attrition Total Torque Index) of 3 or less, the ATT index defined by the following Equation 1:

[Equation 1]

$$\text{ATT index} = \text{Linear velocity(m/s)} * \text{Residence time (hr)} * 3{,}600 / 1{,}000$$

wherein the linear velocity (m/s), which is the rotational speed of the surface crosslinking reactor, is 0.6 m/s to 0.9 m/s, and
the residence time (hr), which is the time that the mixture resides inside the surface crosslinking reactor, is 1.0 hr to 1.5 hr.

The ATT index is a new parameter for the operating conditions of the surface crosslinking reactor. Specifically, the ATT index is derived by selecting operating conditions that may influence the physical properties of the polymer particles to be prepared by the physical force of the surface crosslinking reactor in the step of surface crosslinking, and considering their organic combination. The ATT index is a new parameter which may be controlled to sufficiently realize the desired effect of the surface crosslinking process by minimizing the degradation of physical properties due to the physical force of the device in the surface crosslinking process.

As the ATT index satisfies 3 or less, the physical influence of the device may be minimized, and accordingly, the effective capacity, saline flow conductivity, and absorption rate of the superabsorbent polymer to be finally prepared may be all improved. Preferably, the ATT index may be 1 to 3, 1.5 to 3, 2.0 to 3. Meanwhile, when the ATT index exceeds 3.0, the physical properties of the superabsorbent polymer to be prepared may be significantly deteriorated due to physical damage caused by the surface crosslinking reactor.

Preferably, with regard to the surface crosslinking reactor, a paddle-type dryer is used, and in this case, the rotational speed means the rotational speed of paddles in the paddle-type dryer.

The linear velocity (m/s), which is one of the variables of the ATT index defined by Equation 1, is the rotational speed of the surface crosslinking reactor, and is 0.6 m/s to 0.9 m/s, preferably 0.61 m/s to 0.81 is m/s.

Specifically, the linear velocity of Equation 1 may be calculated according to the following Equation 1-1:

[Equation 1-1]

$$\text{Linear velocity(m/s)} = 2 * 3.14 * r / T$$

wherein r is the radius of the circular trajectory drawn by the rotating paddle in the spherical surface crosslinking reactor, and T is the time (period) taken to complete one revolution inside the surface crosslinking reactor.

The residence time (hr), which is one of the variables of the ATT index defined by Equation 1, is the time that the mixture resides inside the surface crosslinking reactor, and means the time that the mixture resides before being discharged after being introduced into the surface crosslinking reactor. The residence time is 1.0 hr to 1.5 hr, preferably, 1.0 hr to 1.2 hr.

The residence time (hr) of Equation 1 may be calculated according to the following Equation 1-2:

[Equation 1-2]

$$\text{Residence time(hr)} = [\text{Effective volume of surface crosslinking reactor (m}^3) * \text{Bulk density of mixture (g/cm}^3)] / \text{Hourly input amount of mixture introduced into surface crosslinking reactor (Ton/hr)}$$

In the step of surface crosslinking, the surface-crosslinked layer may be formed on at least part of the surface of the base polymer by heat-treating the mixture including the acrylic acid-based base polymer particles in the presence of the surface crosslinking agent, and the heat treatment process increases the surface crosslinking density, i.e., the external crosslinking density, whereas the internal crosslinking density does not change. The superabsorbent polymer, in which the surface-crosslinked layer is formed, may have a structure in which the external crosslinking density is higher than the internal crosslinking density.

In the step of surface crosslinking, a surface crosslinking agent composition including an alcohol-based solvent and water, in addition to the surface crosslinking agent, may be used.

Meanwhile, as the surface crosslinking agent included in the surface crosslinking agent composition, any surface crosslinking agent component that has been traditionally used in the preparation of superabsorbent polymers may be used without any particular limitation. For example, the surface crosslinking agent may include one or more polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate and propylene carbonate; an epoxy compound such as ethylene glycol diglycidyl ether; an oxazoline compound such as oxazolidinone, etc.; a polyamine compound; an oxazoline compound; a mono-, di- or poly-oxazolidinone compound; a cyclic urea compound; and the like. Preferably, ethylene carbonate or propylene carbonate may be used.

Such a surface crosslinking agent may be used in an amount of 0.001 part by weight to 2 parts by weight with respect to 100 parts by weight of the base polymer powder. Preferably, it may be used in an amount of 0.005 parts by weight or more, 0.01 part by weight or more, or 0.02 parts by weight or more, and 0.5 parts by weight or less, 0.3 parts by weight or less. By controlling the content range of the surface crosslinking agent within the above-described range, it is possible to prepare a superabsorbent polymer exhibiting excellent overall physical properties, such as absorption performances, liquid permeability, etc.

Meanwhile, the surface crosslinking agent is mixed with the base polymer particles in the form of a surface crosslinking agent composition including the same. There is no particular limitation on the method of mixing the surface crosslinking agent composition. For example, a method of placing the surface crosslinking agent composition and the base polymer particles in a reactor and mixing them, a method of spraying the surface crosslinking agent composition onto the base polymer particles, a method of continuously supplying the base polymer particles and the surface crosslinking agent composition to a mixer continuously operated and mixing them, etc. may be used.

The surface crosslinking agent composition may further include water and/or hydrophilic organic solvent as a medium. Therefore, it is advantageous in that the surface crosslinking agent may be evenly dispersed on the base polymer particles. At this time, the content of water and the hydrophilic organic solvent may be applied by controlling the addition ratio with respect to 100 parts by weight of the base polymer particles in order to induce uniform dissolution/dispersion of the surface crosslinking agent, to prevent the aggregation phenomenon of the base polymer particles, and at the same time, to optimize the surface penetration depth of the surface crosslinking agent.

The step of surface crosslinking may be performed by heat treatment at a temperature of 100°C to 250°C, 130°C to 250°C, or 150°C to 200°C for about 30 minutes or more. More specifically, in the surface crosslinking, the above-described temperature is determined as the maximum reaction temperature, and the surface crosslinking reaction may be performed by heat treatment at this maximum reaction temperature for 30 minutes to 80 minutes, or 40 minutes to 70 minutes.

By satisfying these surface crosslinking process conditions (particularly, heating conditions and reaction conditions at the maximum reaction temperature), it is possible to prepare a superabsorbent polymer that appropriately satisfies physical properties such as excellent liquid permeability under pressure, etc.

A heating means for the surface crosslinking reaction is not particularly limited. Heating may be performed by providing a heating medium or by directly providing a heat source. In this regard, the kind of the applicable heating medium may be steam, hot air, a hot fluid such as hot oil or the like, but is not limited thereto. The temperature of the heating medium to be provided may be properly selected in consideration of the means of the heating medium, the heating rate, and the heating target temperature. Meanwhile, as the heat source to be directly provided, an electric heating or gas heating method may be used, but is not limited to the above-described examples.

Meanwhile, in the method of preparing the superabsorbent polymer according to one embodiment of the present invention, aluminum salts such as aluminum sulfate salts and other various polyvalent metal salts may be further used during surface crosslinking in order to further improve liquid permeability, etc. These polyvalent metal salts may be included on the surface crosslinked layer of the superabsorbent polymer finally prepared.

**(Superabsorbent polymer)**

The superabsorbent polymer prepared according to the above-described one embodiment may have a particle

size of 150 μm to 850 μm. More specifically, at least 95% by weight or more of the superabsorbent polymer may have a particle size of 150 μm to 850 μm, and the superabsorbent polymer may include 50% by weight or more of particles having a particle size of 300 μm to 600 μm, and less than 3% by weight of fine particles having a particle size of less than 150 μm.

The superabsorbent polymer prepared according to the above-described one embodiment realizes excellent absorption properties.

An effective capacity (EFFC) of the superabsorbent polymer is 27.0 g/g or more, as calculated by the following Equation 2. The effective capacity is preferably, 27.2 g/g or more, 27.3 g/g or more, 27.4 g/g or more, or 27.6 g/g or more, or 27.0 to 30 g/g, or 27.2 to 27.6 g/g.

[Equation 2]

$$\text{Effective capacity(EFFC)} = \{\text{Centrifuge Retention Capacity\_(CRC)} + \text{Absorbency Under Pressure of } 0.7 \text{ psi (AUP)}\}/2$$

wherein the centrifuge retention capacity means a centrifuge retention capacity (CRC), which is measured according to the EDANA method WSP 241.3, and the method of measuring the centrifuge retention capacity will be explained in more detail in Experimental Example to be described later.

The absorbency under pressure means absorbency under a pressure of 0.7 psi, which is measured according to the EDANA method WSP 242.3, and the method of measuring the absorbency under pressure will be explained in more detail in Experimental Example to be described later.

Further, a saline flow conductivity (SFC) of the superabsorbent polymer is $20(*10^{-7}\text{cm}^3 \cdot \text{s/g})$ or more. Preferably, the saline flow conductivity is $35$ to $50(*10^{-7}\text{cm}^3 \cdot \text{s/g})$, or $39$ to $48(*10^{-7} \text{cm}^3 \cdot \text{s/g})$. The saline flow conductivity (SFC) is measured according to a method disclosed in [0184] to [0189] of column 16 of US Patent Publication No. 2009-0131255, and the detailed method will be explained in more detail in Experimental Example to be described later.

The superabsorbent polymer has a time (T-20) of 129 seconds or less, which is taken for 1 g of the superabsorbent polymer to absorb 20 g of an aqueous solution of sodium chloride and C12-C14 alcohol ethoxylate. Preferably, the time is 129 seconds or less, 125 seconds or less, 121 seconds or less, 100 seconds or more, 110 seconds or more, or 100 seconds to 129 seconds, 110 seconds to 125 seconds, or 113 seconds to 121 seconds. The T-20 is calculated and determined by the time taken for 1 g of the superabsorbent polymer to absorb 20 g of an aqueous solution which is prepared by dissolving 9 g of sodium chloride and 1 g of Lorodac (main ingredient: linear C12-C14 alcohol ethoxylate, CAS#68439-50-9) in 1 L of distilled water, and the detailed method will be explained in more detail in Experimental Example to be described later.

Hereinafter, the actions and effects of the present invention will be described in more detail with reference to specific exemplary embodiments of the present invention. However, these exemplary embodiments are provided only for illustrating the present invention, and the scope of the present invention is not limited thereto.

**[Example]**

**<Preparation of superabsorbent polymer>**

**Example 1**

(Step 1) - Polymerizing step

In a 3 L glass container equipped with a stirrer and a thermometer, 100 g of acrylic acid, 0.70 g of polyethylene glycol diacrylate (Mw=523) as an internal crosslinking agent, and an aqueous NaOH solution were mixed at room temperature (25±1°C) to prepare a monomer composition having a total solid content of 43wt% (degree of neutralization of acrylic acid: 72 mol%). Next, 0.0080 g of Irgacure 819 and 33 g of 1.1% sodium persulfate solution as initiators were sequentially added and mixed to prepare a monomer composition.

Then, the monomer composition was supplied at a speed of 500 mL/min to 2000 mL/min on a conveyor belt, in which a belt with a width of 10 cm and a length of 2 m rotated at a speed of 50 cm/min. In addition, UV irradiation was performed for 3 minutes simultaneously with the supply of the monomer composition, thereby obtaining a sheet-type water-containing gel polymer.

(Step 2) - Drying step

Thereafter, the water-containing gel polymer was coarsely pulverized with a chopper having a hole size of 16 mm, introduced into an oven capable of shifting airflow up and down, and dried with hot air at 190°C for 30 minutes.

(Step 3) - Pulverizing and Classifying

Next, the dried product was pulverized by introducing into a pin mill pulverizer, and then classified with an ASTM standard mesh sieve to obtain acrylic acid-based base polymer particles having a particle size of 150 μm to 850 μm.

(Step 4) - Surface crosslinking step

Then, a surface crosslinking solution (1.0 g of ethylene carbonate (A-1), 0.8 g of propylene glycol (A-2), and 3.5 g of water) was sprayed onto 100 g of the prepared base polymer particles, and stirred at room temperature, and mixed while stirring at 300 rpm for 30 seconds such that the surface crosslinking solution was evenly distributed on the base polymer powder.
Subsequently, the mixture including the surface crosslinking solution and the acrylic base polymer particles was put into a surface crosslinking reactor, and a surface crosslinking reaction was performed. In this surface crosslinking reactor, the temperature of the base polymer particles were confirmed to gradually increase from an initial temperature of around 80°C, and were manipulated to reach the maximum reaction temperature of 195°C after 30 minutes. After reaching the maximum reaction temperature, the reaction was further allowed for 20 minutes, and a sample of the final superabsorbent polymer was taken. After the surface crosslinking process, the superabsorbent polymer was classified with a standard mesh sieve of ASTM standard to have a particle diameter of 150 μm to 850 μm.
With regard to operating conditions of the surface crosslinking reactor during the surface crosslinking reaction, a linear velocity was 0.61 m/s, a residence time was 1.1 hr, and ATT index was 2.4.

**Examples 2 to 5 and Comparative Examples 1 to 5**

Each superabsorbent polymer was prepared in the same manner as in Example 1, except that in the step of surface crosslinking, the operating conditions of the surface crosslinking reactor were as in the conditions of Table 1 below.

[Table 1]

| Section | Operating conditions of surface crosslinking reactor | | | Surface crosslinking reaction conditions | |
|---|---|---|---|---|---|
| | Linear velocity (m/s) | Residence time (hr) | ATT index | Component/conte nt* (relative to weight of acrylic acid) | (°C/min) |
| Example 1 | 0.61 | 1.1 | 2.4 | A-1/1.0 A-2/0.8 | 195/50 |
| Example 2 | 0.68 | 1.1 | 2.6 | A-1/1.0 A-2/0.8 | 195/50 |
| Example 3 | 0.66 | 1.2 | 2.9 | A-1/1.0 A-2/0.8 | 195/50 |
| Example 4 | 0.73 | 1.1 | 2.9 | A-1/1.0 A-2/0.8 | 195/50 |
| Example 5 | 0.81 | 1.0 | 3.0 | A-1/1.0 A-2/0.8 | 195/50 |
| Comparative Example 1 | 0.68 | 1.5 | 3.8 | A-1/1.0 A-2/0.8 | 195/50 |
| Comparative Example 2 | 0.68 | 1.3 | 3.3 | A-1/1.0 A-2/0.8 | 195/50 |

(continued)

| Section | Operating conditions of surface crosslinking reactor | | | Surface crosslinking reaction conditions | |
|---|---|---|---|---|---|
| | Linear velocity (m/s) | Residence time (hr) | ATT index | Component/conte nt* (relative to weight of acrylic acid) | (°C/min) |
| Comparative Example 3 | 0.81 | 1.7 | 5.1 | A-1/1.0 A-2/0.8 | 195/50 |
| Comparative Example 4 | 0.81 | 1.5 | 4.4 | A-1/1.0 A-2/0.8 | 195/50 |
| Comparative Example 5 | 0.81 | 1.4 | 3.9 | A-1/1.0 A-2/0.8 | 195/50 |

**[Experimental Example]**

Physical properties of the superabsorbent polymers, each prepared in Examples and Comparative Examples, were evaluated by the following methods, and the results are shown in Table 2.

(1) Centrifuge Retention Capacity (CRC)

From the superabsorbent polymers prepared in Examples and Comparative Examples, those having a particle size of 150 $\mu$m to 850 $\mu$m were taken, and centrifuge retention capacity (CRC) by absorption capacity under no load was measured in accordance with European Disposables and Nonwovens Association standard EDANA WSP 241.2.
In detail, polymers were obtained by classifying the superabsorbent polymers obtained through Examples and Comparative Examples using sieves of #30-50. The polymer W'0(g) (about 0.2 g) was uniformly put in a nonwoven fabric-made bag, followed by sealing. The bag was immersed in physiological saline (0.9 wt%) at room temperature. After 30 minutes, the bag was dehydrated using a centrifuge at 250 G for 3 minutes, and then the weight W'2(g) of the bag was measured. Further, after carrying out the same operation without using the polymer, the weight W'1(g) of the bag was measured. CRC (g/g) was calculated using the obtained weights according to the following Equation 3:

$$[\text{Equation 3}]$$

$$CRC \ (g/g) = \{[W'2(g) - W'1(g)]/W'0(g)\} - 1$$

(2) Absorbency Under Pressure (AUP)

Absorbency under pressure of 0.7 psi of each polymer was measured in accordance with the EDANA method WSP 242.3. Upon measuring absorbency under pressure, the classified polymer used at the time of CRC measurement was used.
In detail, a 400 mesh stainless steel net was installed in the bottom of a plastic cylinder having an internal diameter of 25 mm. The superabsorbent polymer W0(g) (0.16 g) was uniformly scattered on the steel net under conditions of room temperature and humidity of 50%. A piston capable of uniformly providing a load of 0.7 psi was placed thereon, in which an external diameter of the piston was slightly smaller than 25 mm, there was no gab between the internal wall of the cylinder and the piston, and the jig-jog of the cylinder was not interrupted. At this time, the weight W3(g) of the apparatus was measured.
After placing a glass filter having a diameter of 90 mm and a thickness of 5 mm in a petri dish having a diameter of 150 mm, a physiological saline solution consisting of 0.9% by weight of sodium chloride was poured until the surface level of the physiological saline solution became equal to the upper surface of the glass filter. A sheet of filter paper having a diameter of 90 mm was placed on the glass filter. The measurement apparatus was mounted on the filter paper, thereby getting the liquid absorbed under the load for 1 hour. 1 hour later, the weight $W_4$(g) was measured after lifting the measurement apparatus up.
Absorbency under pressure (g/g) was calculated using each of the obtained weights according to the following Equation 4.

[Equation 4]

$$AUP(g/g) = [W_4(g) - W_3(g)]/W_0(g)$$

(3) Effective capacity (EFFC)

Based on the measured values of the above-derived centrifuge retention capacity (CRC) and absorbency under pressure (AUP), effective capacity was measured according to the following Equation 2.

[Equation 2]

Effective capacity(EFFC) = {Centrifuge Retention Capacity (CRC) + Absorbency Under

Pressure of 0.7 psi (AUP)}/2

(4) Saline Flow Conductivity (SFC)

The saline flow conductivity (SFC) was measured according to a method disclosed in [0184] to [0189] of column 16 of US Patent Publication No. 2009-0131255.

(5) T-20

T-20 was measured by the time taken for 1 g of the superabsorbent polymer to absorb 20 g of an aqueous solution which was prepared by dissolving 9 g of sodium chloride and 1 g of Lorodac (main ingredient: linear C12-C14 alcohol ethoxylate, CAS#68439-50-9) in 1 L of distilled water. The detailed method of measuring T-20 is described in detail p13 to p18 of European

Patent Publication No. 2535027.

[Table 2]

| Section | CRC (g/g) | AUP (g/g) | EFFC (g/g) | SFC | T-20 |
|---|---|---|---|---|---|
| Example 1 | 29.1 | 26.1 | 27.6 | 48 | 113 |
| Example 2 | 28.9 | 25.8 | 27.4 | 45 | 115 |
| Example 3 | 29 | 25.6 | 27.3 | 42 | 121 |
| Example 4 | 28.9 | 25.5 | 27.2 | 43 | 121 |
| Example 5 | 29 | 25.3 | 27.2 | 39 | 120 |
| Comparative Example 1 | 28.5 | 25.5 | 26.9 | 31 | 139 |
| Comparative Example 2 | 28.6 | 25.1 | 26.9 | 30 | 138 |
| Comparative Example 3 | 28.3 | 24.9 | 26.6 | 26 | 145 |
| Comparative Example 4 | 28.5 | 24.5 | 26.5 | 31 | 138 |
| Comparative Example 5 | 28.6 | 24.8 | 26.7 | 33 | 130 |

As confirmed from the data of Table 2, Examples according to the preparation method of the present invention satisfy a specific ATT index of 3 or less, which controls the operating conditions of the reactor in the step of surface crosslinking, thereby realizing excellent absorption properties.
In particular, it was confirmed that, as compared to Comparative Examples, all Examples showed excellent saline flow conductivity, and their absorption rate of T-20 was significantly improved.

**Claims**

1. A method of preparing a superabsorbent polymer, the method comprising the step of:

   preparing superabsorbent polymer particles having a surface-crosslinked layer which is formed on at least part of the surface of acrylic acid-based base polymer particles by heat-treating a mixture including the acrylic acid-based base polymer particles in the presence of a surface crosslinking agent,
   wherein the step of forming the surface-crosslinked layer is performed in a surface crosslinking reactor satisfying an ATT index of 3 or less, the ATT index defined by the following Equation 1:

   [Equation 1]

   $$\text{ATT index} = \text{Linear velocity(m/s)} * \text{Residence time (hr)} * 3{,}600 / 1{,}000$$

   wherein the linear velocity (m/s), which is the rotational speed of the surface crosslinking reactor, is 0.6 m/s to 0.9 m/s, and
   the residence time (hr), which is the time that the mixture resides inside the surface crosslinking reactor, is 1.0 hr to 1.5 hr.

2. The method of claim 1, wherein the ATT index is 1 to 3.

3. The method of claim 1, wherein the surface crosslinking reactor is a paddle-type dryer.

4. The method of claim 1, wherein the linear velocity of Equation 1 is calculated according to the following Equation 1-1:

   [Equation 1-1]

   $$\text{Linear velocity(m/s)} = 2 * 3.14 * r / T$$

   wherein r is the radius of the circular trajectory drawn by the rotating paddle in the spherical surface crosslinking reactor, and T is the time (period) taken to complete one revolution inside the surface crosslinking reactor.

5. The method of claim 1, wherein the residence time (hr) of Equation 1 is calculated according to the following Equation 1-2:

   [Equation 1-2]

   $$\text{Residence time(hr)} = [\text{Effective volume of surface crosslinking reactor (m}^3) * \text{Bulk}$$

   $$\text{density of mixture (g/cm}^3)] / \text{Hourly input amount of mixture introduced into surface crosslinking}$$

   $$\text{reactor (Ton/hr)}$$

6. The method of claim 1, wherein the acrylic acid-based base polymer particles are prepared by the step of forming a water-containing gel polymer by crosslinking-polymerizing an acrylic acid-based monomer having acidic groups of which at least part is neutralized, in the presence of an internal crosslinking agent; and the step of drying and pulverizing the water-containing gel polymer.

7. The method of claim 1, wherein the step of forming the surface-crosslinked layer is performed at 100°C to 250°C.

8. The method of claim 1, wherein the surface crosslinking agent is one or more selected from the group consisting of polyols selected from the group consisting of ethylene glycol, propylene glycol, 1,3-propanediol, 1,4-butanediol, 1,6-hexanediol, 1,2-hexanediol, 1,3-hexanediol, 2-methyl-1,3-propanediol, 2,5-hexanediol, 2-methyl-1,3-pentanediol, 2-methyl-2,4-pentanediol, tripropylene glycol and glycerol; one or more carbonate-based compounds selected from the group consisting of ethylene carbonate and propylene carbonate; an epoxy compound; an oxazoline compound; a polyamine compound; an oxazoline compound; a mono-, di- or poly-oxazolidinone compound; and a cyclic urea compound.

9. The method of claim 1, wherein the surface crosslinking agent is included in an amount of 0.001 part by weight to 2 parts by weight with respect to 100 parts by weight of the acrylic acid-based base polymer particles.

10. The method of claim 1, wherein the superabsorbent polymer has an effective capacity (EFFC) of 27.0 g/g or more, which is calculated by the following Equation 2:

[Equation 2]

Effective capacity(EFFC) = {Centrifuge Retention Capacity (CRC) + Absorbency Under

Pressure of 0.7 psi (AUP)}/2

11. The method of claim 1, wherein the superabsorbent polymer has a saline flow conductivity (SFC) of $20(*10^{-7}cm^3 \cdot s/g)$ or more.

12. The method of claim 1, wherein a time (T-20), taken for 1 g of the superabsorbent polymer to absorb 20 g of an aqueous solution of sodium chloride and C12-C14 alcohol ethoxylate, is 129 seconds or less.

## INTERNATIONAL SEARCH REPORT

| International application No. |
| --- |
| **PCT/KR2022/017882** |

**A.      CLASSIFICATION OF SUBJECT MATTER**

**C08J 3/24**(2006.01)i

According to International Patent Classification (IPC) or to both national classification and IPC

**B.      FIELDS SEARCHED**

Minimum documentation searched (classification system followed by classification symbols)

C08J 3/24(2006.01); A61F 13/00(2006.01); A61L 15/60(2006.01); B01J 20/26(2006.01); B01J 20/30(2006.01); C08F 20/04(2006.01); C08K 3/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 고흡수성 수지(superabsorbent polymer), 표면 가교제(surface crosslinking agent), 선속도(linear velocity), 체류시간(residence time)

**C.      DOCUMENTS CONSIDERED TO BE RELEVANT**

| Category* | Citation of document, with indication, where appropriate, of the relevant passages | Relevant to claim No. |
| --- | --- | --- |
| A | KR 10-2019-0012811 A (LG CHEM, LTD.) 11 February 2019 (2019-02-11) See claim 1; and paragraphs [0170]-[0175]. | 1-12 |
| A | KR 10-0858387 B1 (NIPPON SHOKUBAI CO., LTD.) 11 September 2008 (2008-09-11) See entire document. | 1-12 |
| A | JP 2016-112475 A (NIPPON SHOKUBAI CO., LTD.) 23 June 2016 (2016-06-23) See entire document. | 1-12 |
| A | WO 2008-117186 A1 (KIMBERLY-CLARK WORLDWIDE, INC.) 02 October 2008 (2008-10-02) See entire document. | 1-12 |
| A | KR 10-2019-0069101 A (LG CHEM, LTD.) 19 June 2019 (2019-06-19) See entire document. | 1-12 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 March 2023** | **02 March 2023** |

| Name and mailing address of the ISA/KR | Authorized officer |
| --- | --- |
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/017882**

| Patent document cited in search report | | | Publication date (day/month/year) | Patent family member(s) | | | Publication date (day/month/year) |
|---|---|---|---|---|---|---|---|
| KR | 10-2019-0012811 | A | 11 February 2019 | CN | 109689740 | A | 26 April 2019 |
| | | | | CN | 109689740 | B | 17 December 2021 |
| | | | | EP | 3498760 | A1 | 19 June 2019 |
| | | | | EP | 3498760 | B1 | 09 February 2022 |
| | | | | JP | 2020-521848 | A | 27 July 2020 |
| | | | | JP | 7080258 | B2 | 03 June 2022 |
| | | | | KR | 10-2487977 | B1 | 11 January 2023 |
| | | | | US | 10894844 | B2 | 19 January 2021 |
| | | | | US | 2019-0194367 | A1 | 27 June 2019 |
| | | | | WO | 2019-022389 | A1 | 31 January 2019 |
| KR | 10-0858387 | B1 | 11 September 2008 | AU | 2005-210411 | A1 | 18 August 2005 |
| | | | | AU | 2005-210411 | B2 | 31 January 2008 |
| | | | | CN | 1917954 | A | 21 February 2007 |
| | | | | EP | 1721663 | A1 | 15 November 2006 |
| | | | | EP | 1721663 | B1 | 14 December 2016 |
| | | | | JP | 4926474 | B2 | 09 May 2012 |
| | | | | KR | 10-2007-0004669 | A | 09 January 2007 |
| | | | | US | 2005-0209352 | A1 | 22 September 2005 |
| | | | | US | 2008-0269372 | A1 | 30 October 2008 |
| | | | | US | 7473739 | B2 | 06 January 2009 |
| | | | | US | 7582705 | B2 | 01 September 2009 |
| | | | | WO | 2005-075070 | A1 | 18 August 2005 |
| JP | 2016-112475 | A | 23 June 2016 | JP | 2016-112474 | A | 23 June 2016 |
| | | | | JP | 2016-113465 | A | 23 June 2016 |
| | | | | WO | 2014-162843 | A1 | 09 October 2014 |
| WO | 2008-117186 | A1 | 02 October 2008 | CN | 101641064 | A | 03 February 2010 |
| | | | | EP | 2129349 | A1 | 09 December 2009 |
| | | | | EP | 2129349 | B1 | 11 April 2012 |
| | | | | JP | 2010-522008 | A | 01 July 2010 |
| | | | | JP | 5236668 | B2 | 17 July 2013 |
| | | | | KR | 10-1409129 | B1 | 17 June 2014 |
| | | | | KR | 10-2009-0123904 | A | 02 December 2009 |
| | | | | US | 2008-0234645 | A1 | 25 September 2008 |
| | | | | US | 7935860 | B2 | 03 May 2011 |
| KR | 10-2019-0069101 | A | 19 June 2019 | KR | 10-2447936 | B1 | 26 September 2022 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210167459
- US 20090131255 A
- EP 2535027 A

**Non-patent literature cited in the description**

- **REINHOLD SCHWALM.** UV Coatings: Basics, Recent Developments and New Application. Elsevier, 2007, 115
- **ODIAN.** Principle of Polymerization. Wiley, 1981, 203
- *CHEMICAL ABSTRACTS,* 68439-50-9